(19) **Europäisches Patentamt / European Patent Office / Office européen des brevets**

(11) **EP 3 824 021 B1**

(12) **EUROPEAN PATENT SPECIFICATION**

(45) Date of publication and mention of the grant of the patent:
**25.10.2023 Bulletin 2023/43**

(21) Application number: **19745539.7**

(22) Date of filing: **11.07.2019**

(51) International Patent Classification (IPC):
**C08J 9/14** *(2006.01)*

(52) Cooperative Patent Classification (CPC):
**C08J 9/146; C08J 9/145;** C08J 2201/03;
C08J 2203/142; C08J 2203/162; C08J 2203/182;
C08J 2323/02; C08J 2325/06; C08J 2325/12;
C08J 2355/02

(86) International application number:
**PCT/US2019/041284**

(87) International publication number:
**WO 2020/018332 (23.01.2020 Gazette 2020/04)**

(54) **BLOWING AGENT BLENDS**

TREIBMITTELMISCHUNGEN

MÉLANGES D'AGENTS GONFLANTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.07.2018 US 201862698550 P**

(43) Date of publication of application:
**26.05.2021 Bulletin 2021/21**

(73) Proprietor: **The Chemours Company FC, LLC Wilmington, Delaware 19801 (US)**

(72) Inventor: **KONTOMARIS, Konstantinos Wilmington, Delaware 19808 (US)**

(74) Representative: **Heinemann, Monica et al Abitz & Partner Patentanwälte mbB Arabellastraße 17 81925 München (DE)**

(56) References cited:
**WO-A1-2009/155490      WO-A1-2017/192550 US-A1- 2018 022 884**

**Description**

**CROSS-REFERENCE TO RELATED APPLICATIONS**

This application claims the benefit of U.S. Provisional Application Serial No. 62/698,550, filed July 16, 2018.

**TECHNICAL FIELD**

This invention relates to the use of HFO-1336mzz-Z blends as blowing agents for thermoplastic polymers selected from the group consisting of polystyrene homopolymer, polystyrene copolymer and styrene-acrylonitrile copolymer, or a blend thereof.

**BACKGROUND**

The production of various types of foams historically employed chlorofluorocarbons (*i.e.,* CFCs) as the blowing agent. In general, the CFCs yield foams exhibiting good thermal insulation, low flammability, and excellent dimensional stability. However, despite these advantages the CFCs have fallen into disfavor due to their implication in the destruction of stratospheric ozone, as well as their implication in contributing to global warming. Thus, there is a need for blowing agents to have both low ODP (ozone depletion potential) and GWP (global warming potential).

WO2017/192550 A1 discloses a process for preparing a styrene-based foam by extrusion-foaming with Z-1336-mzz as a blowing agent.

**SUMMARY**

The present application provides, *inter alia,* processes for preparing a thermoplastic polymer foam, the process comprising:

(a) providing a foamable composition comprising a thermoplastic polymer and a blowing agent, wherein the blowing agent comprises from about 95% to about 1% by weight Z- 1, 1, 1,4,4,4-hexafluoro-2-butene and from about 1% to about 95% by weight 2-chloropropane; and wherein the thermoplastic polymer is selected from the group consisting of polystyrene homopolymer, polystyrene copolymer and styrene-acrylonitrile copolymer, or a blend thereof, and

(b) expanding the foamable composition to produce the thermoplastic polymer foam.

The present application further provides thermoplastic polymer foam, comprising:

(a) a thermoplastic polymer selected from the group consisting of polystyrene homopolymer, a polystyrene copolymer, and styrene-acrylonitrile copolymer, or a blend thereof; and
(b) a blowing agent comprising from 95% to 1% by weight Z-1,1,1,4,4,4-hexafluoro-2-butene and from 1% to 95% by weight 2-chloropropane.

In some embodiments, the thermoplastic polymer foams provided herein are prepared according to one or more of the processes described herein.

Unless otherwise defined, all technical and scientific terms used herein have the same meaning as commonly understood by one of ordinary skill in the art to which this invention belongs. Methods and materials are described herein for use in the present invention; other, suitable methods and materials known in the art can also be used. The materials, methods, and examples are illustrative only and not intended to be limiting. In case of conflict, the present specification, including definitions, will control.

As used herein, the unit psi can be converted as follows into a SI unit:

1 psi = 6.9 kPa.

**DESCRIPTION OF DRAWINGS**

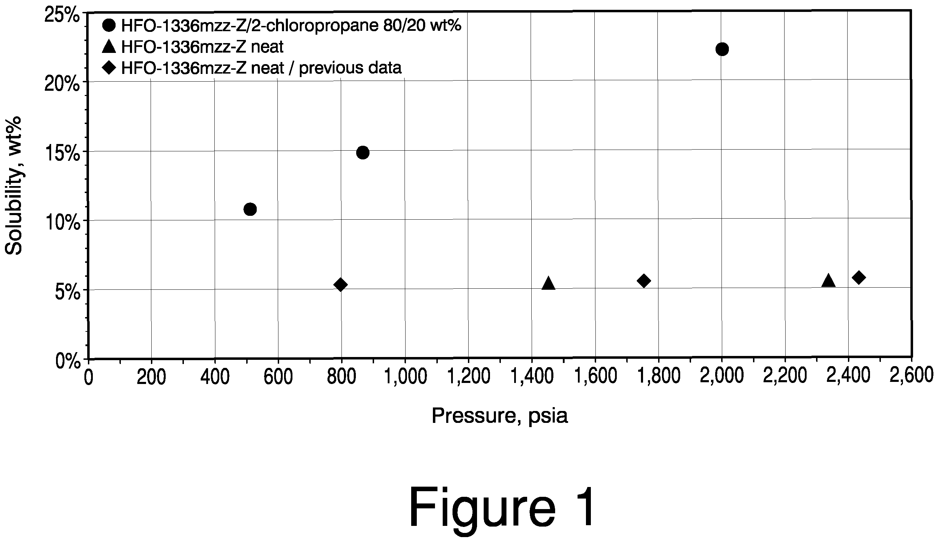

Figure 1 compares the solubility of a HFO-1336mzz-Z/2-chloropropane blend containing 20 wt% 2-chloropropane in polystyrene with melt flow index (MFI) 5.00 g/10 min at 176 °C, to the solubility of neat HFO-1336mzz-Z in polystyrene.

## DETAILED DESCRIPTION

Incumbent agents with high global warming potentials (GWPs) for the expansion of thermoplastic foam, e.g. extruded polystyrene foam (XPS), are under regulatory pressure. Z-1,1,1,4,4,4-hexafluoro-2-butene (*i.e.,* HFO-1336mzz-Z) could, in principle, be used as low-GWP agents for the expansion of polystyrene (or other thermoplastic polymer) into foam with high thermal insulation capability. However, HFO-1336mzz-Z has low solubility in softened polystyrene under the operating conditions of the incumbent extrusion process. As a result, they would lead to suboptimal foam properties (*e.g.,* higher than desirable foam density).

A blowing agent for the expansion of thermoplastic polystyrene foam must be sufficiently soluble in the molten thermoplastic polystyrene resin under foam formation conditions so that an adequate volume of the blowing agent is available during the foam expansion and cooling phase to form cells and reduce the effective foam density to the target value. Expansion agent present in excess of its solubility could lead to foam defects.

As described herein, it has been found that, unexpectedly, blends of HFO-1336mzz-Z with 2-chloropropane can exhibit solubility in softened polystyrene that significantly exceeds the solubility of neat HFO-1336mzz-Z at the same conditions (see *e.g.,* Figure 1). For example, the solubility of neat HFO-1336mzz-Z in softened polystyrene homopolymer with a Melt Flow Index (MFI) of 5.0 g/10 min at 179 °C and 2003 psia is estimated as 5.5 g per 100 g of polystyrene. In contrast, the solubility of an exemplary HFO-1336mzz-Z/2-chloropropane blend containing 20 wt% 2-chloropropane has a solubility in the same polystyrene under the same temperature and pressure of 22.2 g per 100 g of polystyrene (*i.e.,* 300% greater than the solubility of neat HFO-1336mzz-Z).

Accordingly, blends comprising HFO-1336mzz-Z, 2-chloropropane and, optionally, at least one additional compound provided herein (*e.g.,* an additional compound selected from the group consisting of HFOs, HCFOs, HFCs, HFEs, HCFCs, CFCs, $CO_2$, $N_2$, olefins, hydrochloroolefins, chlorinated hydrocarbons, organic acids, alcohols, hydrocarbons, ethers, aldehydes, ketones, water, methyl formate, ethyl formate, formic acid, and trans-1,2-dichloroethylene (DCE)) could be useful as blowing agents with low or moderate GWP for the expansion of thermoplastic extruded polystyrene foam.

### Definitions & Abbreviations

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

Also, use of "a" or "an" are employed to describe elements and components described herein. This is done merely for convenience and to give a general sense of the scope of the invention. This description should be read to include one or at least one and the singular also includes the plural unless it is obvious that it is meant otherwise.

As used herein, the term "about" is meant to account for variations due to experimental error (*e.g.,* plus or minus approximately 10% of the indicated value). All measurements reported herein are understood to be modified by the term "about", whether or not the term is explicitly used, unless explicitly stated otherwise.

As used herein, the term "consisting of" excludes any element, step, or ingredient not specified. If in the claim, such would close the claim to the inclusion of materials other than those recited except for impurities ordinarily associated therewith. When the phrase "consists of" or "consisting of" appears in a clause of the body of a claim, rather than immediately following the preamble, it limits only the element set forth in that clause; other elements are not excluded from the claim as a whole.

As used herein, the term "consisting essentially of" is used to define a composition, method that includes materials, steps, features, components, or elements, in addition to those literally disclosed provided that these additional included materials, steps, features, components, or elements do not materially affect the basic and novel characteristic(s) of the claimed invention, especially the mode of action to achieve the desired result of any of the processes of the present invention. The term "consists essentially of" or "consisting essentially of" occupies a middle ground between "comprising" and "consisting of".

When an amount, concentration, or other value or parameter is given as either a range, preferred range or a list of upper preferable values and/or lower preferable values, this is to be understood as specifically disclosing all ranges formed from any pair of any upper range limit or preferred value and any lower range limit or preferred value, regardless of whether ranges are separately disclosed. Where a range of numerical values is recited herein, unless otherwise stated, the range is intended to include the endpoints thereof, and all integers and fractions within the range.

Global warming potential (GWP) is an index for estimating relative global warming contribution due to atmospheric emission of a kilogram of a particular greenhouse gas compared to emission of a kilogram of carbon dioxide. GWP can be calculated for different time horizons showing the effect of atmospheric lifetime for a given gas. The GWP for the 100-year time horizon is commonly the value referenced.

As used herein the term "Ozone depletion potential" (ODP) is defined in "The Scientific Assessment of Ozone Depletion, 2002, A report of the World Meteorological Association's Global Ozone Research and Monitoring Project," section 1.4.4, pages 1.28 to 1.31 (see first paragraph of this section). ODP represents the extent of ozone depletion in the stratosphere expected from a compound on a mass-for-mass basis relative to fluorotrichloromethane (CFC-11).

The following abbreviations may be used herein:

**CFC:** chlorofluorocarbon
**GWP:** global warming potential
**HCFC:** hydrochlorofluorocarbon
**HCFO:** hydrochlorofluoroolefin
**HFC:** hydrofluorocarbon
**HFE:** hydrofluoroether
**HFO:** hydrofluoroolefin
**HFC-152a:** 1,1-difluoroethane
**HFO-1336mzz-Z or 1336mzz-Z:** Z-1,1,1,4,4,4-hexafluoro-2-butene
**MFI:** Melt Flow Index
**ODP:** Ozone depletion potential
**PS:** polystyrene
**wt%:** weight percent or percent by weight

*Processes and Foams of the Invention*

The present application provides processes for preparing a thermoplastic polymer foam.

The processes provided herein comprise:

(a) providing a foamable composition comprising a thermoplastic polymer and a blowing agent, wherein the blowing agent comprises from 95% to 1% by weight Z-1,1,1,4,4,4-hexafluoro-2-butene and from 1% to 95% by weight 2-chloropropane; wherein the thermoplastic polymer is selected from the group consisting of polystyrene homopolymer, polystyrene copolymer and styrene-acrylonitrile copolymer, or a blend thereof, and
(b) expanding the foamable composition to produce the thermoplastic polymer foam.

The solubility of the blowing agent in the polymer is greater than the solubility of the Z- 1, 1, 1,4,4,4-hexafluoro-2-butene, alone, in the polymer.

In some embodiments, the blowing agent comprises about 90% to about 5% by weight Z-1,1,1,4,4,4-hexafluoro-2-butene, for example, about 90% to about 10%, about 90% to about 30%, about 90% to about 50%, about 90% to about 70%, about 70% to about 5%, about 70% to about 10%, about 70% to about 30%, about 70% to about 50%, about 50% to about 5%, about 50% to about 10%, about 50% to about 30%, about 30% to about 5%, about 30% to about 10%, or about 10% to about 5% by weight Z-1,1,1,4,4,4-hexafluoro-2-butene. In some embodiments, the blowing agent comprises about 60% to about 10% by weight Z- 1, 1, 1,4,4,4-hexafluoro-2-butene. In some embodiments, the blowing agent comprises about 50% to about 10% by weight Z-1,1,1,4,4,4-hexafluoro-2-butene. In some embodiments, the blowing agent comprises about 40% to about 15% by weight Z- 1, 1, 1,4,4,4-hexafluoro-2-butene. In some embodiments, the blowing agent comprises about 30% to about 20% by weight Z-1,1,1,4,4,4-hexafluoro-2-butene.

In some embodiments, the blowing agent comprises about 1% to about 90% by weight 2-chloropropane, for example, about 1% to about 70%, about 1% to about 50%, about 1% to about 30%, about 1% to about 10%, about 10% to about 90%, about 10% to about 70%, about 10% to about 50%, about 10% to about 30%, about 30% to about 90%, about 30% to about 70%, about 30% to about 50%, about 50% to about 90%, about 50% to about 70%, or about 70% to about 90% by weight 2-chloropropane. In some embodiments, the blowing agent comprises about 1% to about 30% by weight 2-chloropropane. In some embodiments, the blowing agent comprises about 1% to about 25% by weight 2-chloropropane. In some embodiments, the blowing agent comprises about 5% to about 15% by weight 2-chloropropane.

In some embodiments, the blowing agent comprises up to about 80% by weight Z-1,1,1,4,4,4-hexafluoro-2-butene, for example, up to about 70%, 60%, 50%, 40%, 30%, 20%, or 10% by weight Z- 1, 1, 1,4,4,4-hexafluoro-2-butene.

In some embodiments, the blowing agent comprises at least about 20% by weight 2-chloropropane, for example, at least about 30%, 40%, 50%, 60%, 70%, 80%, or 90% by weight 2-chloropropane.

In some embodiments, the blowing agent comprises up to about 80% by weight Z-1,1,1,4,4,4-hexafluoro-2-butene and at least about 20% by weight 2-chloropropane.

In some embodiments, the blowing agent consists essentially of Z-1,1,1,4,4,4-hexafluoro-2-butene and 2-chloropropane. In some embodiments, the blowing agent consists of Z-1,1,1,4,4,4-hexafluoro-2-butene and 2-chloropropane.

In some embodiments, the blowing agent provided herein further comprises HFC-152a.

In some embodiments, the solubility of the blowing agent comprising HFC-152a in the polymer is greater than the solubility of the Z-1,1,1,4,4,4-hexafluoro-2-butene, alone, in the polymer.

In some embodiments, the blowing agent comprising HFC-152a comprises about 5% to about 60% by weight Z-1,1,1,4,4,4-hexafluoro-2-butene, for example, about 5% to about 40%, about 5% to about 20%, about 5% to about 10%, about 10% to about 60%, about 10% to about 40%, about 10% to about 20%, about 20% to about 60%, about 20% to about 40%, or about 40% to about 60% by weight Z-1,1,1,4,4,4-hexafluoro-2-butene. In some embodiments, the blowing agent comprising HFC-152a comprises about 10% to about 50% by weight Z-1,1,1,4,4,4-hexafluoro-2-butene. In some embodiments, the blowing agent comprising HFC-152a comprises about 15% to about 45% by weight Z-1,1,1,4,4,4-hexafluoro-2-butene. In some embodiments, the blowing agent comprising HFC-152a comprises about 20% to about 30% by weight Z-1,1,1,4,4,4-hexafluoro-2-butene.

In some embodiments, the blowing agent comprising HFC-152a comprises about 1% to about 25% by weight 2-chloropropane, for example, about 1% to about 20%, about 1% to about 15%, about 1% to about 10%, about 1% to about 5%, about 5% to about 25%, about 5% to about 20%, about 5% to about 15%, about 5% to about 10%, about 10% to about 25%, about 10% to about 20%, about 10% to about 15%, about 15% to about 25%, about 15% to about 20%, or about 20% to about 25% by weight 2-chloropropane. In some embodiments, the blowing agent comprising HFC-152a comprises about 1% to about 20% by weight 2-chloropropane.

In some embodiments, the blowing agent comprising HFC-152a comprises about 5% to about 95% by weight HFC-152a, for example, about 5% to about 80%, about 5% to about 50%, about 5% to about 25%, about 5% to about 10%, about 10% to about 95%, about 10% to about 80%, about 10% to about 50%, about 10% to about 25%, about 25% to about 95%, about 25% to about 80%, about 25% to about 50%, about 50% to about 95%, about 50% to about 80%, or about 80% to about 95% by weight HFC-152a. In some embodiments, the blowing agent comprising HFC-152a comprises about 20% to about 80% by weight HFC-152a. In some embodiments, the blowing agent comprising HFC-152a comprises about 50% to about 70% by weight HFC-152a.

In some embodiments, the blowing agent consists essentially of Z-1,1,1,4,4,4-hexafluoro-2-butene, 2-chloropropane, and HFC-152a. In some embodiments, the blowing agent consists of Z-1,1,1,4,4,4-hexafluoro-2-butene, 2-chloropropane, and HFC-152a.

In some embodiments, the blowing agent comprises:

about 10% to about 40% by weight Z-1,1,1,4,4,4-hexafluoro-2-butene;
about 5% to about 10% by weight 2-chloropropane; and
about 50% to about 85% by weight HFC-152a.

In some embodiments, the blowing agent comprises:

about 10% to about 40% by weight Z-1,1,1,4,4,4-hexafluoro-2-butene;
about 6% to about 9% by weight 2-chloropropane; and
about 54% to about 81% by weight HFC-152a.

In some embodiments, the blowing agent comprises:

about 25% to about 35% by weight Z-1,1,1,4,4,4-hexafluoro-2-butene;
about 1% to about 10% by weight 2-chloropropane; and
about 60% to about 70% by weight HFC-152a.

In some embodiments, the blowing agent comprises:

about 25% to about 30% by weight Z-1,1,1,4,4,4-hexafluoro-2-butene;
about 5% to about 10% by weight 2-chloropropane; and
about 60% to about 65% by weight HFC-152a.

In some embodiments, the blowing agent comprises:

about 28% to about 30% by weight Z-1,1,1,4,4,4-hexafluoro-2-butene;
about 6% to about 8% by weight 2-chloropropane; and

about 63% to about 65% by weight HFC-152a.

In some embodiments, the blowing agent comprises:

about 29% by weight Z- 1, 1, 1,4,4,4-hexafluoro-2-butene;
about 7% by weight 2-chloropropane; and
about 64% by weight HFC-152a.

In some embodiments, the blowing agent comprises:

about 80 wt% Z- 1, 1, 1,4,4,4-hexafluoro-2-butene and about 20 wt% 2-chloropropane; or
about 80 wt% Z-1,1,1,4,4,4-hexafluoro-2-butene, about 15 wt% 2-chloropropane, and about 5 wt% HFC-152a; or
about 80 wt% Z-1,1,1,4,4,4-hexafluoro-2-butene, about 10 wt% 2-chloropropane, and about 10 wt% HFC-152a; or
about 80 wt% Z-1,1,1,4,4,4-hexafluoro-2-butene, about 5 wt% 2-chloropropane, and about 15 wt% HFC-152a; or
about 70 wt% Z-1,1,1,4,4,4-hexafluoro-2-butene and about 30 wt% 2-chloropropane; or
about 70 wt% Z- 1, 1, 1,4,4,4-hexafluoro-2-butene, about 20 wt% 2-chloropropane, and about 10 wt% HFC-152a; or
about 70 wt% Z-1,1,1,4,4,4-hexafluoro-2-butene, about 10 wt% 2-chloropropane, and about 20 wt% HFC-152a; or
about 70 wt% Z-1,1,1,4,4,4-hexafluoro-2-butene, about 5 wt% 2-chloropropane, and about 25 wt% HFC-152a; or
about 60 wt% Z- 1, 1, 1,4,4,4-hexafluoro-2-butene and about 40 wt% 2-chloropropane; or
about 60 wt% Z-1,1,1,4,4,4-hexafluoro-2-butene, about 30 wt% 2-chloropropane, and about 10 wt% HFC-152a; or
about 60 wt% Z- 1, 1, 1,4,4,4-hexafluoro-2-butene, about 20 wt% 2-chloropropane, and about 20 wt% HFC-152a; or
about 60 wt% Z-1,1,1,4,4,4-hexafluoro-2-butene, about 10 wt% 2-chloropropane, and about 30 wt% HFC-152a; or
about 60 wt% Z-1,1,1,4,4,4-hexafluoro-2-butene, about 5 wt% 2-chloropropane, and about 35 wt% HFC-152a; or
about 50 wt% Z-1,1,1,4,4,4-hexafluoro-2-butene and about 50 wt% 2-chloropropane; or
about 50 wt% Z- 1, 1, 1,4,4,4-hexafluoro-2-butene, about 40 wt% 2-chloropropane, and about 10 wt% HFC-152a; or
about 50 wt% Z-1,1,1,4,4,4-hexafluoro-2-butene, about 30 wt% 2-chloropropane, and about 20 wt% HFC-152a; or
about 50 wt% Z- 1, 1, 1,4,4,4-hexafluoro-2-butene, about 20 wt% 2-chloropropane, and about 30 wt% HFC-152a; or
about 50 wt% Z-1,1,1,4,4,4-hexafluoro-2-butene, about 10 wt% 2-chloropropane, and about 40 wt% HFC-152a; or
about 50 wt% Z-1,1,1,4,4,4-hexafluoro-2-butene, about 5 wt% 2-chloropropane, and about 45 wt% HFC-152a.

In some embodiments, the process of the invention further comprises heating the polymer and blowing agent in the presence of one or more additives. Exemplary additives include, but are not limited to, nucleating agents, cell stabilizer agents, surfactants, preservative colorants, antioxidants, reinforcing agents, fillers, antistatic agents, IR attenuating agents, extrusion aids, plasticizers, and viscosity modifiers, or any combination thereof, in an amount to obtain the effect desired.

In some embodiments, the blowing agent provided herein is substantially free of additives. In some embodiments, the blowing agent provided herein comprises one or more additives (e.g., one, two, three, four, or five additives).

In some embodiments, the process of the invention is performed in the presence of a nucleating agent. In some embodiments, the nucleating agent is selected from talc, graphite, and magnesium silicate.

In some embodiments, the foamable composition further comprises a flame retardant. In some embodiments, the flame retardant comprises a polymeric flame retardant or a halogenated flame retardant. In some embodiments, the flame retardant is a brominated flame retardant or a chlorinated flame retardant. In some embodiments, the flame retardant is PolyFR.

In some embodiments, the foamable composition further comprises an Infrared Attenuating Agent.

As used herein, the term "molten composition" refers to a foamable composition. The amount of blowing agent in the molten composition will depend on the amount of additives other than blowing agent and the density desired in the foamed product. In some embodiments, the amount of blowing agent in the foamable composition is from about 5 to about 20 wt%. In some embodiments, the amount of blowing agent in the foamable composition is from about 5 to about 15 wt%, based on the weight of the foamable composition. It is understood that the weight percentage of the blowing agent in the foamable composition can be adjusted based on the desired density of the foam, and the ratio of components in the blowing agent.

In some embodiments, the blowing agent is from about 5 parts to about 25 parts per hundred parts of polymer by mass, for example, about 5 to about 20, about 5 to about 15, about 5 to about 10, about 10 to about 25, about 10 to about 20, about 10 to about 15, about 15 to about 25, about 15 to about 20, or about 20 to about 25 parts per hundred parts of polymer by mass. In some embodiments, the blowing agent is from about 7 parts to about 18 parts per hundred parts of polymer by mass.

The thermoplastic polymer provided herein is selected from the group consisting of styrene homopolymer, polystyrene copolymer, styrene-acrylonitrile copolymer, or a blend thereof. embodiments, the polymerized units of styrene constitute at least 70 mol %, at least 80 mol %, at least 90 mol %, or at least 100 mol % of the polymerized monomer units of the thermoplastic polymer.

When the thermoplastic polymer contains styrene copolymer, the amount of the additional monomer copolymerized with the styrene is such that the styrene content of the copolymer is at least 60 mol % of the copolymer, at least 70 mol %, at least 80 mol %, or at least 90 mol % of the copolymer, based on the total number of moles (*i.e.,* 100%) of the copolymer. It is understood that these ratios apply whether the styrene copolymer is the only styrene-containing polymer in the thermoplastic polymer or is a blend with other thermoplastic polymer, such as styrene homopolymer or other styrene copolymer.

In some embodiments, the thermoplastic polymer comprises styrene homopolymer (*i.e.,* polystyrene homopolymer). When the thermoplastic polymer is a blend of polystyrene and other thermoplastic polymer as described above, the polystyrene component of this blend is preferably styrene homopolymer comprising at least 80 wt% of the combined weight of polystyrene and other thermoplastic polymer.

The molecular weight of the thermoplastic polymer comprising polystyrene being foamed is sufficiently high to provide the strength necessary for the requirements of the foam application. The strength requirement determines the minimum density of the foamed product. The high molecular weight of the thermoplastic polymer comprising polystyrene also contributes to the strength of the foamed product. An indicator of molecular weight is the rate at which the molten polymer flows through a defined orifice under a defined load. The lower the flow, the higher the molecular weight. Measurement of the melt flow rate is determined in accordance with ASTM D 1238 at 200°C and using a 5 kg weight on the molten polymer. The weight of molten polymer flowing through the orifice in a defined amount of time, enables the melt flow rate to be reported in g/10 min. Preferably the melt flow rate of the thermoplastic polymer comprising polystyrene is no greater than 20 g/10 min, more preferably no greater than 15 g/10 min, and most preferably, no greater than 10 g/10 min. Surprisingly the higher the molecular weight (lower the melt flow rate), the better the foaming result, especially with respect to the attainability of low density foamed products, while still achieving smooth skin on the foamed product. Preferably the minimum melt flow rate for all the melt flow rates disclosed herein is at least 1 g/10 min, whereby the melt flow rate ranges disclosed herein include, but are not limited to, 1 to 25, 1 to 20, 1 to 15, and 1 to 10 g/10 min. In some embodiments, the melt flow rate is about 25 g/10 min or less, as determined in accordance with the procedure of ASTM D 1238 at 200°C using a 5 kg weight on the molten polymer.

The references to thermoplastic polymer comprising polystyrene also apply to polystyrene by itself. Thus, for example, the disclosure of thermoplastic polymer comprising polystyrene in the preceding paragraph can be replaced by the disclosure polystyrene.

In some embodiments, the process of the invention further comprises extruding the thermoplastic polymer to form a thermoplastic polymer foam comprising Z-1, 1, 1,4,4,4-hexafluoro-2-butene, 2-chloropropane, and optionally HFC-152a.

In some embodiments, the extruding is performed at a die temperature of from about 100°C to about 150°C, for example, about 100°C to about 140°C, about 100°C to about 130°C, about 100°C to about 120°C, about 100°C to about 110°C, about 110°C to about 150°C, about 110°C to about 140°C, about 110°C to about 130°C, about 110°C to about 120°C, about 120°C to about 150°C, about 120°C to about 140°C, about 120°C to about 130°C, about 130°C to about 150°C, about 130°C to about 140°C, or about 140°C to about 150°C. In some embodiments, the extruding is performed at a die temperature of from about 110°C to about 140°C. In some embodiments, the extruding is performed at a die temperature of from about 120°C to about 130°C.

In some embodiments, the process of the invention is performed in an extruder to 1) form the foamable composition into a desired form; and 2) to extrude the foamable composition to form a thermoplastic polymer foam comprising Z-1,1,1,4,4,4-hexafluoro-2-butene, 2-chloropropane, and, optionally, HFC-152a.

When the process of the invention is performed in an extruder, the thermoplastic polymer forms the feed to the extruder. The blowing agent and co-blowing agent are preferably fed into the extruder at a location intermediate to the feed and extrusion ends of the extruder, typically into the foamable composition that is created as the extrusion screw advances the feeds along the length of the extruder. Additional additives may be added where convenient and as may be dictated by the state of the additive. For example, solid additives can be conveniently be added to the feed end of the extruder, possibly as a mixture with the polymer feed in particulate form to the extruder. The resulting foamable composition within the extruder is extruded through a die, thereby allowing the foamable composition to expand into the foamed product of a desired shape (e.g., a sheet, a plank, a rod, or a tube) and subsequently cooled.

In the region within the extruder where the composition is melted to form the molten composition, this melting occurring by the input of heat and the heat developed in the mixing process forming the melt, this is considered the melt mixing region. In one embodiment, the temperature is at least 185°C, more preferably at least 190°C or at least 200°C or at least 210°C. In some embodiments, the maximum temperature for all the melt mixing temperatures disclosed herein is 250°C. The melt mixing temperatures disclosed herein are the temperatures of the melt in the mixing zone at the time of mixing. In some embodiments, the pressure under which the melt mixing is carried out is at least 3000 psi (207 Bar), more preferably at least 3500 psi (241 Bar), more preferably at least 4000 psi (276 Bar). In some embodiment, the maximum value for all the minimum pressures disclosed under which the melt mixing is carried out is no greater than 5000 psi (345 Bar). The pressures disclosed herein are gauge pressures.

In the region within the extruder where the molten composition is extruded, the molten composition is cooled so that the temperature at which the extrusion is carried out is preferably at least 105°C, more preferably 110°C, more preferably at least 125°C. In some embodiments, the maximum value for all the minimum extrusion temperatures disclosed herein is preferably no greater than 140°C. The extrusion temperatures disclosed herein are the temperature of the melt at the time of extrusion.

In some embodiments, the extrusion is preferably carried out with a pressure of at least 1500 psi (103 Bar), more preferably at least 1600 psi (110 Bar). The maximum value for the minimum extrusion pressures disclosed herein is preferably no greater than 2000 psi (138 Bar). The extrusion pressure is the pressure inside the extrusion die.

In some embodiments, the process is performed at a pressure just before foaming of from about 100 psi to about 5000 psi, for example, about 100 psi to about 4000 psi, about 100 psi to about 3000 psi, about 100 psi to about 2000 psi, about 100 psi to about 1000 psi, about 1000 psi to about 5000 psi, about 1000 psi to about 4000 psi, about 1000 psi to about 3000 psi, about 1000 psi to about 2000 psi, about 2000 psi to about 5000 psi, about 2000 psi to about 4000 psi, about 2000 psi to about 3000 psi, about 3000 psi to about 5000 psi, about 3000 psi to about 4000 psi, or about 4000 psi to about 5000 psi. In some embodiments, the process is performed at a pressure just before foaming of from about 500 psi to about 4000 psi. In some embodiments, the process is performed at a pressure just before foaming of from about 800 psi to about 3000 psi. In some embodiments, the process is performed at a pressure just before foaming of from about 1000 psi to about 2500 psi.

The disclosures of multiple ranges for melt flow rate, temperature and pressure above can be used in any combination in the practice of the present invention to obtain the particular foamed structure desired. For example, melt mixing pressures of 3000 to 5000 psi (207 to 345 Bar) are preferred for achieving low foam densities of the foamed product, and this temperature range can be used with any of the melt mixing and extrusion temperature ranges to form any of the smooth-skin, closed cell foam product densities disclosed herein. The same is true for the melt extrusion pressure range of 1500 to 2000 psi (103 to 138 Bar) together with the 3000 to 5000 psi (207 to 345 bar) pressure range for melt mixing. Most preferably, the two preferred pressure ranges, for melt mixing (207 to 345 Bar) and extrusion (103 to 138 bar) are used together. The melt flow rates for the polymer being foamed of no greater than 25, 20, 15, and 10, and as little as at least 1, all values being in g/10 min, can be used with any of these combinations of pressure and temperatures, depending on the foamed product result desired.

When the process of the invention is performed in an extruder, the thermoplastic polymer (*i.e.*, the foamable composition) is cooled such that the temperature at which the extrusion is performed is preferably at least 125°C and more preferably at least 130°C. In some embodiments, the temperature at which the extrusion is performed is a temperature less than the first temperature of the process of the invention. In some embodiments, the maximum value for all the minimum extrusion temperatures disclosed herein is about 150°C or less. In some embodiments, the extruding is performed at a temperature of from about 100°C to about 150°C. In some embodiments, the extruding is performed at a temperature of from about 110°C to about 140°C.

In some embodiments, the extrusion temperature disclosed herein is the temperature of the polymer melt at the time of extrusion.

When the process of the invention is performed in an extruder, the extrusion is preferably performed with a pressure of at least 1500 psi (103 Bar) and more preferably at least 1600 psi (110 Bar). The maximum value for the minimum extrusion pressures disclosed herein is preferably no greater than 2000 psi (138 Bar). In some embodiments, the extruding is performed at a pressure of from about 1500 psi to about 2000 psi. In some embodiments, the extrusion pressure disclosed herein is the pressure inside the extrusion die.

In some embodiments, the extruding is performed at a pressure of from about 100 psi to about 5000 psi, for example, about 100 psi to about 4000 psi, about 100 psi to about 2000 psi, about 100 psi to about 1000 psi, about 1000 psi to about 5000 psi, about 1000 psi to about 4000 psi, about 1000 psi to about 2000 psi, about 2000 psi to about 5000 psi, about 2000 psi to about 4000 psi, or about 4000 psi to about 5000 psi.

In some embodiments, the extruding is performed at a pressure of from about 500 psi to about 4000 psi.

In some embodiments, the extruding is performed at a pressure of from about 750 psia to about 3000 psia.

In some embodiments, the extruding is performed at a pressure of from about 900 psia to about 2750 psia.

In some embodiments, the present application provides a foam product (*e.g.*, a thermoplastic polymer foam) prepared according to one or more of the processes described herein.

The foam comprises:

(a) a thermoplastic polymer selected from the group consisting of polystyrene homopolymer, a polystyrene copolymer, and styrene-acrylonitrile copolymer, or a blend thereof; and
(b) a blowing agent comprising Z-1,1,1,4,4,4-hexafluoro-2-butene and 2-chloropropane as provided herein.

In some embodiments, the foam comprises:

> (a) a thermoplastic polymer selected from the group consisting of polystyrene homopolymer, a polystyrene copolymer, and styrene-acrylonitrile copolymer, or a blend thereof; and
> (b) a blowing agent comprising Z-1,1,1,4,4,4-hexafluoro-2-butene, 2-chloropropane, and HFC-152a as provided herein.

In some embodiments, the foam provided herein further comprises one or more additives described herein.

It is understood that the blowing agent blends, additives, melt flow rates, temperatures, pressures, and other process parameters described herein can be used in any combination in the practice of the present invention to obtain the particular foamed structure desired.

In some embodiments, the thermoplastic polymer foams provided herein comprise one or more of the following properties:

- Closed cells - at least 70%, at least 80%, at least 90%, or at least 95%. Closed cell content can be measured according to ASTM method D6226-05.

- Average Cell Size: From about 0.005 mm to about 5 mm (*i.e.*, 5 $\mu$m to about 5000 $\mu$m), for example, about 0.01 mm to about 5 mm, about 0.05 mm to about 5 mm, about 0.05 mm to about 0.5 mm. In some embodiments, the average cell size is from about 0.01 mm to about 1 mm. In some embodiments, the average cell size is from about 0.02 mm to about 0.5 mm. In some embodiments, the average cell size is from about 0.1 mm to about 0.3 mm.

- Density no greater than about 40 kg/m$^3$, no greater than about 35 kg/m$^3$, or no greater than about 23 kg/m$^3$. Density can be measured according to ISO method 845 85.

- Smooth skin.

- Substantially free of blowholes.

**EXAMPLES**

The invention will be described in greater detail by way of specific examples. The following examples are offered for illustrative purposes, and are not intended to limit the invention in any manner.

**Example 1. Solubility of an HFO-1336mzz-Z/2-chloropropane Blend in Softened Polystyrene Homo-Polymer**

This example demonstrates the enhanced solubility of Z-1,1,1,4,4,4-hexafluoro-2-butene (*i.e.*, HFO-1336mzz-Z)/2-chloropropane blends in softened polystyrene compared to the solubility of neat HFO-1336mzz-Z in softened polystyrene.

The solubilities of HFO-1336mzz-Z and an HFO-1336mzz-Z/2-chloropropane blend containing 20 wt% 2-chloropropane in softened polystyrene were determined by the following procedure: Approximately 78 g polystyrene was loaded into a 125 cc stainless steel Parr$^©$ reactor. The reactor was weighed, mounted to inlet/outlet piping, immersed in an oil bath and evacuated. An HIP pressure generator (made by High Pressure Equipment Company) was used to load an amount of blowing agent in excess of its expected solubility into the evacuated reactor. The oil bath was heated and maintained at a temperature of 179°C for 30 minutes before the final pressure was recorded. The Parr$^©$ reactor was removed from the oil bath and cooled to room temperature. The reactor (with re-solidified polystyrene inside) was weighed after excess (non-dissolved in the polystyrene) blowing agent was drained or vented. The weight gain was recorded as solubility according to the following equation:

$$\textbf{Equation 1.}$$

$$\text{solubility (wt\%)} = (\text{resin weight gain} \div 78) \text{ X } 100.$$

It was been found that, unexpectedly, a blend of HFO-1336mzz-Z with 2-chloropropane exhibits solubility in softened polystyrene that significantly exceeds the solubility of neat HFO-1336mzz-Z at the same conditions (see Figure 1). For example, the solubility of neat HFO-1336mzz-Z in softened polystyrene homopolymer with a Melt Flow Index (MFI) of 5.0 g/10 min at 179 °C and 2003 psia was estimated as 5.5 g/100 g of polystyrene. In contrast, the solubility of an HFO-1336mzz-Z/2-chloropropane blend containing 20 wt% 2-chloropropane exhibited a solubility in the same polystyrene, at the same temperature and pressure, of 22.2 g/100 g of polystyrene, or 300% higher solubility than the solubility of neat HFO-1336mzz-Z.

**Example 2. Polystyrene Foam Extrusion Using HFO-1336mzz-Z/HFC-152a/2-chloropropane Blend as the Blowing Agent**

This example demonstrates the reduction in XPS foam density resulting from the addition of 2-chloropropane in a blowing agent blend containing HFO-1336mzz-Z and HFC-152a. The polystyrene was styrene homo-polymer (Total Petrochemicals, PS 535B) having a melt flow rate of 4 g/10 min. A nucleating agent (talc) was present with the polystyrene and blowing agent in the molten composition formed within the extruder.

A 50 mm twin screw laboratory extruder was used with 9 individually controlled, electrically heated zones. The first four zones of the extruder were used to heat and soften the polymer. The remaining barrel sections, from the blowing agent injection location to the end of the extruder, were set at selected lower temperatures. A rod die with a 2 mm opening was used for extruding foamed rod specimens. Results are summarized in Table 1.

**Table 1. Extruder Operating Parameters and Foam Density Achieved**

|  | Units | Run A | Run B | B vs A (%) |
|---|---|---|---|---|
| HFO-1336mzz-Z | wt% | 32 | 29 | |
| HFC-152a | wt% | 68 | 64 | |
| 2-chloropropane | wt% | 0 | 7 | |
| Extruder screw rotational speed | rpm | 40 | 40 | |
| Polystyrene flow rate | kg/h | 20 | 20 | |
| Nucleator proportion in the solids feed | wt% | 0.15 | 0.15 | |
| Blowing agent flow rate | kg/h | 1.71 | 2.04 | |
| Die Temperature | °C | 149 | 140 | |
| Die Pressure | Psi | 1550 | 1350 | |
| Effective Foam Density | $kg/m^3$ | 34 | 29 | -14.7 |

The results in Table 1 show that use of a HFO-1336mzz-Z/HFC-152a/2-chloropropane blend containing 7 wt% 2-chloropropane and about 30 wt% HFO-1336mzz-Z as the blowing agent enables the formation of extruded polystyrene foam with a density about 15% lower than the density achieved with a HFO-1336mzz-Z/HFC-152a blend containing about 30 wt% HFO-1336mzz-Z as the blowing agent.

**Claims**

1.  A process for preparing a thermoplastic polymer foam, the process comprising:

    (a) providing a foamable composition comprising a thermoplastic polymer and a blowing agent, wherein the blowing agent comprises from 95% to 1% by weight Z-1,1,1,4,4,4-hexafluoro-2-butene and from 1% to 95% by weight 2-chloropropane; and wherein the thermoplastic polymer is selected from the group consisting of polystyrene homopolymer, a polystyrene copolymer, and styrene-acrylonitrile copolymer, or a blend thereof, and
    (b) expanding the foamable composition to produce the thermoplastic polymer foam.

2.  The process of claim 1, wherein

    wherein the blowing agent comprises 50% to 10% by weight Z-1,1,1,4,4,4-hexafluoro-2-butene, or
    wherein the blowing agent comprises 1% to 30% by weight 2-chloropropane, or
    wherein the blowing agent comprises up to 80% by weight Z-1,1,1,4,4,4-hexafluoro-2-butene and at least 20% by weight 2-chloropropane.

3. The process of claim 1, wherein the blowing agent consists of Z-1,1,1,4,4,4-hexafluoro-2-butene and 2-chloropropane.

4. The process of claim 1, wherein the blowing agent further comprises HFC-152a.

5. The process of claim 4,

wherein the blowing agent comprises 5% to 60% by weight Z-1,1,1,4,4,4-hexafluoro-2-butene, or
wherein the blowing agent comprises 1% to 20% by weight 2-chloropropane, or
wherein the blowing agent comprises 5% to 95% by weight HFC-152a, or
wherein the blowing agent consists of Z-1,1,1,4,4,4-hexafluoro-2-butene, 2-chloropropane, and HFC-152a.

6. The process of claim 1, wherein the thermoplastic polymer is is a polystyrene homopolymer.

7. The process of claim 1, wherein the process is performed at a pressure just before foaming of from 6.90 bar (100 psi) to 344.7 bar (5000 psi).

8. The process of claim 1, further comprising extruding the thermoplastic polymer to form the thermoplastic polymer foam, preferably, wherein the extruding is performed at a die temperature of from 100°C to 150°C.

9. The process of claim 1 wherein the foamable composition further comprises nucleating agent, preferably, wherein the nucleating agent is selected from the group consisting of talc, graphite, and magnesium silicate.

10. The process of claim 1, wherein the foamable composition further comprises a flame retardant, preferably, wherein the flame retardant comprises a polymeric flame retardant or a halogenated flame retardant, more preferably, wherein the flame retardant is a brominated flame retardant or a chlorinated flame retardant.

11. The process of claim 1, wherein the foamable composition further comprises an Infrared Attenuating Agent.

12. The process of claim 1, wherein the blowing agent is from 1 part to 25 parts per hundred parts of polymer by mass, preferably, wherein the blowing agent is from 7 parts to 18 parts per hundred parts of polymer by mass.

13. A thermoplastic polymer foam, comprising:

(a) a thermoplastic polymer selected from the group consisting of polystyrene homopolymer, a polystyrene copolymer, and styrene-acrylonitrile copolymer, or a blend thereof; and
(b) a blowing agent comprising from 95% to 1% by weight Z-1,1,1,4,4,4-hexafluoro-2-butene and from 1% to 95% by weight 2-chloropropane.

14. The thermoplastic polymer foam of claim 13, wherein the blowing agent further comprises HFC-152a.


**Patentansprüche**

1. Verfahren zum Herstellen eines thermoplastischen Polymerschaumstoffs, wobei das Verfahren Folgendes umfasst:

(a) Bereitstellen einer schäumbaren Zusammensetzung umfassend ein thermoplastisches Polymer und ein Treibmittel, wobei das Treibmittel 95 bis 1 Gew.-% Z-1,1,1,4,4,4-Hexafluor-2-buten und 1 bis 95 Gew.-% 2-Chlorpropan umfasst, und wobei das thermoplastische Polymer aus der Gruppe ausgewählt wird bestehend aus Polystyrolhomopolymer, einem Polystyrolcopolymer und Styrol-Acrylnitril-Copolymer oder einer Mischung davon und
(b) Expandieren der schäumbaren Zusammensetzung, um den thermoplastischen Polymerschaumstoff herzustellen.

2. Verfahren nach Anspruch 1,

wobei das Treibmittel 50 bis 10 Gew.-% Z-1,1,1,4,4,4-Hexafluor-2-buten umfasst oder
wobei das Treibmittel 1 bis 30 Gew.-% 2-Chlorpropan umfasst oder

wobei das Treibmittel bis zu 80 Gew.-% Z-1,1,1,4,4,4-Hexafluor-2-buten und mindestens 20 Gew.-% 2-Chlorpropan umfasst.

3. Verfahren nach Anspruch 1, wobei das Treibmittel aus Z-1,1,1,4,4,4-Hexafluor-2-buten und 2-Chlorpropan besteht.

4. Verfahren nach Anspruch 1, wobei das Treibmittel ferner HFC-152a umfasst.

5. Verfahren nach Anspruch 4,

wobei das Treibmittel 5 bis 60 Gew.-% Z-1,1,1,4,4,4-Hexafluor-2-buten umfasst oder
wobei das Treibmittel 1 bis 20 Gew.-% 2-Chlorpropan umfasst oder
wobei das Treibmittel 5 bis 95 Gew.-% HFC-152a umfasst oder
wobei das Treibmittel aus Z-1,1,1,4,4,4-Hexafluor-2-buten, 2-Chlorpropan und HFC-152a besteht.

6. Verfahren nach Anspruch 1, wobei das thermoplastische Polymer ein Polystyrolhomopolymer ist.

7. Verfahren nach Anspruch 1, wobei das Verfahren bei einem Druck, kurz vor dem Schäumen, von 6,90 bar (100 psi) bis 344,7 bar (5 000 psi) ausgeführt wird.

8. Verfahren nach Anspruch 1, ferner das Extrudieren des thermoplastischen Polymers umfassend, um den thermoplastischen Polymerschaumstoff zu bilden, wobei das Extrudieren bevorzugt bei einer Düsentemperatur von 100 °C bis 150 °C ausgeführt wird.

9. Verfahren nach Anspruch 1, wobei die schäumbare Zusammensetzung ferner einen Keimbildner umfasst, wobei der Keimbildner bevorzugt aus der Gruppe ausgewählt wird bestehend aus Talkum, Graphit und Magnesiumsilicat.

10. Verfahren nach Anspruch 1, wobei die schäumbare Zusammensetzung ferner ein Flammschutzmittel umfasst, wobei das Flammschutzmittel bevorzugt ein polymeres Flammschutzmittel oder ein halogeniertes Flammschutzmittel umfasst, wobei das Flammschutzmittel noch bevorzugter ein bromiertes Flammschutzmittel oder ein chloriertes Flammschutzmittel ist.

11. Verfahren nach Anspruch 1, wobei die schäumbare Zusammensetzung ferner ein infrarotschwächendes Mittel umfasst.

12. Verfahren nach Anspruch 1, wobei das Treibmittel aus 1 Teil bis 25 Teilen pro hundert Teilen Polymer, auf die Masse bezogen, besteht, wobei das Treibmittel bevorzugt aus 7 Teilen bis 18 Teilen pro hundert Teilen Polymer, auf die Masse bezogen, besteht.

13. Thermoplastischer Polymerschaumstoff, umfassend:

(a) ein thermoplastisches Polymer ausgewählt aus der Gruppe bestehend aus Polystyrolhomopolymer, einem Polystyrolcopolymer und Styrol-Acrylnitril-Copolymer oder einer Mischung davon und
(b) ein Treibmittel umfassend 95 bis 1 Gew.-% Z-1,1,1,4,4,4-Hexafluor-2-buten und 1 bis 95 Gew.-% 2-Chlorpropan.

14. Thermoplastischer Polymerschaumstoff nach Anspruch 13, wobei das Treibmittel ferner HFC-152a umfasst.

**Revendications**

1. Procédé de préparation d'une mousse polymère thermoplastique, le procédé comprenant :

(a) la fourniture d'une composition expansible comprenant un polymère thermoplastique et un agent d'expansion, dans lequel l'agent d'expansion comprend de 95 % à 1 % en poids de Z-1,1,1,4,4,4-hexafluoro-2-butène et de 1 % à 95 % en poids de 2-chloropropane ; et dans lequel le polymère thermoplastique est sélectionné dans le groupe constitué d'un homopolymère de polystyrène, d'un copolymère de polystyrène, et d'un copolymère de styrène-acrylonitrile, ou d'un mélange de ceux-ci, et
(b) l'expansion de la composition expansible pour produire la mousse polymère thermoplastique.

**2.** Procédé selon la revendication 1,

> dans lequel l'agent d'expansion comprend de 50 % à 10 % en poids de Z-1,1,1,4,4,4-hexafluoro-2-butène, ou
> dans lequel l'agent d'expansion comprend de 1 % à 30 % en poids de 2-chloropropane, ou
> dans lequel l'agent d'expansion comprend jusqu'à 80 % en poids de Z-1,1,1,4,4,4-hexafluoro-2-butène et au moins 20 % en poids de 2-chloropropane.

**3.** Procédé selon la revendication 1, dans lequel l'agent d'expansion est constitué de Z-1,1,1,4,4,4-hexafluoro-2-butène et de 2-chloropropane.

**4.** Procédé selon la revendication 1, dans lequel l'agent d'expansion comprend en outre du HFC-152a.

**5.** Procédé selon la revendication 4,

> dans lequel l'agent d'expansion comprend de 5 % à 60 % en poids de Z-1,1,1,4,4,4-hexafluoro-2-butène, ou
> dans lequel l'agent d'expansion comprend de 1 % à 20 % en poids de 2-chloropropane, ou
> dans lequel l'agent d'expansion comprend de 5 % à 95 % en poids de HFC-152a, ou
> dans lequel l'agent d'expansion est constitué de Z-1,1,1,4,4,4-hexafluoro-2-butène, de 2-chloropropane, et de HFC-152a.

**6.** Procédé selon la revendication 1, dans lequel le polymère thermoplastique est un homopolymère de polystyrène.

**7.** Procédé selon la revendication 1, dans lequel le procédé est effectué à une pression, juste avant l'expansion, de 6,90 bars (100 psi) à 344,7 bars (5 000 psi).

**8.** Procédé selon la revendication 1, comprenant en outre l'extrusion du polymère thermoplastique pour former la mousse polymère thermoplastique, préférablement, dans lequel l'extrusion est effectuée à une température de filière de 100 °C à 150 °C.

**9.** Procédé selon la revendication 1, dans lequel la composition expansible comprend en outre un agent de nucléation, préférablement, dans lequel l'agent de nucléation est sélectionné dans le groupe constitué du talc, du graphite, et du silicate de magnésium.

**10.** Procédé selon la revendication 1, dans lequel la composition expansible comprend en outre un agent ignifuge, préférablement, dans lequel l'agent ignifuge comprend un agent ignifuge polymère ou un agent ignifuge halogéné, plus préférablement, dans lequel l'agent ignifuge est un agent ignifuge bromé ou un agent ignifuge chloré.

**11.** Procédé selon la revendication 1, dans lequel la composition expansible comprend en outre un agent d'atténuation infrarouge.

**12.** Procédé selon la revendication 1, dans lequel l'agent d'expansion est constitué de 1 partie à 25 parties pour cent parties de polymère en masse, préférablement, dans lequel l'agent d'expansion est constitué de 7 parties à 18 parties pour cent parties de polymère en masse.

**13.** Mousse polymère thermoplastique, comprenant :

> (a) un polymère thermoplastique sélectionné dans le groupe constitué d'un homopolymère de polystyrène, d'un copolymère de polystyrène, et d'un copolymère de styrène-acrylonitrile, ou d'un mélange de ceux-ci ; et
> (b) un agent d'expansion comprenant de 95 % à 1 % en poids de Z-1,1,1,4,4,4-hexafluoro-2-butène et de 1 % à 95 % en poids de 2-chloropropane.

**14.** Mousse polymère thermoplastique selon la revendication 13, dans laquelle l'agent d'expansion comprend en outre du HFC-152a.

Figure 1

14

**EP 3 824 021 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62698550
- WO 2017192550 A1